# EUROPEAN PATENT APPLICATION

(11) **EP 4 607 425 A1**
(43) Date of publication of application: **27.08.2025**
(21) Application number: 25151074.9
(22) Date of filing: 09.01.2025
(51) Int. Cl.: G06Q 10/0833, G06Q 10/0835, G06Q 50/40

(54) **METHOD AND SYSTEM FOR MONITORING REAL-TIME MARITIME LOGISTICS AND OPERATING TRANSPORTATION INFORMATION SHARING PLATFORM**

(30) Priority: 21.02.2024 KR 20240024701
(71) Applicant: GBTS Corp, Incheon 22371 (KR)
(72) Inventor: SEO, Chang Kil, 22364 Incheon (KR)
(74) Representative: Bjerkén Hynell KB

(57) **Abstract**

The present disclosure provides a method of monitoring real-time maritime logistics and operating a transportation information sharing platform. The method includes receiving shipment information including product information, a place of departure, and a place of arrival from a shipper terminal, and transmitting the shipment information to a forwarder terminal (S110), receiving, from the forwarder terminal, a specific area in a bonded warehouse corresponding to the shipment information, a name of a vessel delivering a product, a bill of lading (BL) number, and maritime monitoring and information systems (MMIS) (S120), generating a uniform resource locator (URL) including the bill of lading number, the name of the vessel, and the shipping information, and transmitting the uniform resource locator (URL) to the shipper terminal and the forwarder terminal (S130), and providing the shipping information in real time (S140) to the shipper terminal and the forwarder terminal through the uniform resource locator (URL).

## Description

### CROSS-REFERENCE TO RELATED APPLICATION

This application is based on and claims priority under 35 U.S.C. §119 to Korean Patent Application No. 10-2024-0024701, filed on February 21, 2024, in the Korean Intellectual Property Office, the disclosure of which is incorporated by reference herein in its entirety.

### BACKGROUND

The present disclosure relates to a method and system for monitoring real-time maritime logistics and operating a transportation information sharing platform. More particularly, the present disclosure relates to a technology for monitoring real-time export and import freight and sharing shipping information and transportation information with maritime logistics-related entities through a uniform resource locator (URL).

Movement of logistics between countries mainly uses airplanes and ships. Airplanes have the advantage of time but have the disadvantage of being expensive and limited in goods that may be transported. Meanwhile, ships have the advantage of being able to ship a variety of goods and low costs but have the disadvantage of taking a long time because the ships have to use a sea route.

Among the two types, logistics using ships accounts for the larger volume.

The most important thing in moving logistics is to provide guidance on where the logistics are located. The existing maritime freight logistics management system has limited logistics reliability and efficiency due to information delays and opacity. This leads to difficulties in tracking freight, lack of information sharing, and increased uncertainty in logistics process.

The biggest problem of the existing system is the absence of real-time information and limited information sharing between users. Due to this, it is difficult to access important information, such as an exact location, state, and expected arrival time of the freight, which reduces the efficiency of a logistics process.

In addition, paper-based document work is time-consuming, costly, and environmentally burdensome.

Accordingly, there is an increasing need for a technology for providing shipping information to entities that easily provide or use maritime logistics.

### SUMMARY

The present disclosure is intended to solve the problems described above and an object of the present disclosure is to monitor export and import freight in real time and share shipping information and transportation information with maritime logistics-related entities through URL.

In addition, another object of the present disclosure is to overcome limitations of the existing maritime freight logistics management system and provide a more efficient and transparent information management and sharing method for maritime logistics users.

In addition, another object of the present disclosure is to overcome limitations of the existing system that may not provide accurate location and state information of maritime freight in real time, solve the problem of limited information sharing among maritime logistics users, and improve information accessibility.

In addition, another object of the present disclosure is to reduce time delay and inefficiency occurring in a logistics process, improve the efficiency of logistics management, reduce the time, cost, and environmental burden of paper-based document work, and switch to digital document processing.

However, technical problems solved by the present embodiments are not limited to the technical problems described above, and other technical problems may exist.

An embodiment according to the first aspect of the present disclosure provides a method of monitoring real-time maritime logistics and operating a transportation information sharing platform. The method includes receiving shipment information including product information, a place of departure, and a place of arrival from a shipper terminal, and transmitting the shipment information to a forwarder terminal, receiving, from the forwarder terminal, a specific area in a bonded warehouse corresponding to the shipment information, a name of a vessel delivering a product, a bill of lading (BL) number, and maritime monitoring and information systems (MMIS), generating a uniform resource locator (URL) including the bill of lading number, the name of the vessel, and the shipping information, and transmitting the uniform resource locator to the shipper terminal and the forwarder terminal, and providing the shipping information in real time to the shipper terminal and the forwarder terminal through the uniform resource locator.

An embodiment according to the second aspect of the present disclosure provides a system for monitoring real-time maritime logistics and operating transportation information sharing platform. The system includes a communication module, a processor, and a memory electrically connected to the processor and storing at least one code executed by the processor, wherein the processor is configured to receive shipment information including product information, a place of departure, and a place of arrival from a shipper terminal, transmit the shipment information to a forwarder terminal, receive, from the forwarder terminal, a specific area in a bonded warehouse corresponding to the shipment information, a name of a vessel delivering a product, a bill of lading (BL) number, and maritime monitoring and information systems (MMIS), generate a uniform resource locator (URL) including the bill of lading number, the name of the vessel, and the shipping information, transmit the uniform resource locator to the shipper terminal and the forwarder terminal, provide the shipping information in real time to the shipper terminal and the forwarder terminal through the uniform resource locator, and the memory stores codes that cause the processor to operate.

### BRIEF DESCRIPTION OF THE DRAWINGS

Embodiments of the inventive concept will be more clearly understood from the following detailed description taken in conjunction with the accompanying drawings in which:
FIG. 1 is a diagram illustrating a system for monitoring a real-time maritime logistics and operating transportation information sharing platform according to an embodiment of the present disclosure;
FIG. 2 is a diagram illustrating a detailed configuration of a server illustrated in FIG. 1;
FIGS. 3 and 4 are example views illustrating shipping information according to an embodiment of the present disclosure; and
FIG. 5 is a flowchart illustrating a sequence of a method of monitoring a real-time maritime logistics and operating transportation information sharing platform according to another embodiment of the present disclosure.

### DETAILED DESCRIPTION OF THE EMBODIMENTS

Hereafter, the present disclosure will be described in detail with reference to the accompanying drawings. However, the present disclosure may be implemented in many different forms and is not limited to the embodiments described herein. In addition, the accompanying drawings are only for easy understanding of the embodiments disclosed in the present specification, and the technical ideas disclosed in the present specification are not limited by the accompanying drawings. All terms, which include technical and scientific terms and are used herein, should be construed as meanings commonly understood by those skilled in the art in the technical field to which the present disclosure belongs. Terms defined in the dictionary should be construed as having additional meanings consistent with the related technical literature and currently disclosed content, and should not be construed in a very ideal or limited sense unless otherwise defined.

In order to clearly describe the present disclosure in the drawings, parts irrelevant to the descriptions are omitted, and a size, a shape, and a form of each component illustrated in the drawings may be variously modified. The same or similar reference numerals are assigned to the same or similar portions throughout the specification.

Throughout the specification, when a portion is said to be "connected (coupled, in contact with, or combined)" with another portion, this includes not only a case where it is "directly connected (coupled, in contact with, or combined)" ", but also a case where there is another member therebetween. In addition, when a portion "includes (comprises or provides)" a certain component, this does not exclude other components, and means to "include (comprise or provide)" other components unless otherwise described.

In the present disclosure, a "portion" includes a unit realized by hardware, a unit realized by software, and a unit realized by using both. In addition, one unit may be realized by using two or more pieces of hardware, and two or more units may be realized by using one piece of hardware. Meanwhile, a "∼ portion" is not limited to software or hardware, and a "- portion" may be configured to be included in an addressable storage medium or may be configured to reproduce one or more processors. Therefore, in one example, "∼ portion" refers to components, such as software components, object-oriented software components, class components, and task components, and includes processes, functions, properties, and procedures, subroutines, segments of program code, drivers, firmware, microcode, circuits, data, databases, data structures, tables, arrays, and variables. The functions provided within the components and "portions" may be combined into a smaller number of components and "portions" or may be further separated into additional components and "portions". Additionally, components and "portions" may be implemented to regenerate one or more central processing units (CPUs) included in a device or security multimedia card.

Suffixes "module" and "portion" for components used in the following description are given or used interchangeably by only considering the ease of writing the specification, and do not have distinct meanings or roles by themselves.. In addition, in describing the embodiments disclosed in the present specification, when it is determined that detailed descriptions of related known technologies may obscure the gist of the embodiments disclosed in the present specification, the detailed descriptions are omitted.

Terms indicating ordinal numbers, such as first and second, used in the present specification are used only for the purpose of distinguishing one component from another component and do not limit the order or relationship of the components. For example, the first component of the present disclosure may be referred to as the second component, and similarly, the second element may also be referred to as the first component. As used herein, singular forms of expression should be construed to also include plural forms of expression, unless the contrary is clearly indicated.

A "shipper terminal" and a "forwarder terminal" to be described below may be implemented by a computer or portable terminal that may be connected to a server or another terminal through a network. Here, a computer may include, for example, a laptop computer, a desktop computer, virtual reality (VR) head mounted display (HMD) (for example, HTC VIVE, Oculus Rift, GearVR, DayDream, PSVR, or so on), or so on in which a web browser is stored. Here, the VR HMD include an HMD for a personal computer (PC) (for example, HTC VIVE, Oculus Rift, FOVE, Deepon, or so on), a mobile HMD (for example, GearVR, DayDream, Storm Magic, Google Cardboard, or so on), a console HMD (PSVR), an independently implemented Stand Alone model (for example, Deepon, PICO, or so on), and so on. A mobile terminal is, for example, a wireless communication device that guarantees portability and mobility and may include not only a smartphone, a tablet personal computers (PC), or a wearable device, but also various devices equipped with communication modules of Bluetooth (Bluetooth low energy (BLE)), near field communication (NFC), radio frequency identification (RFID), ultrasonic, infrared, WiFi, LiFi, or so on. In addition, a "network" refers to a connection structure capable of exchanging information between nodes, such as a terminal and a server and includes a local area network (LAN), a wide area network (WAN), the Internet (WWW: World Wide Web), a wired and wireless data communications network, a telephone network, a wired and wireless television communication network, and so on. For example, the wireless data communication network includes third generation (3G), fourth generation (4G), fifth generation (5G), third generation partnership project (3GPP), long term evolution (LTE), world interoperability for microwave access (WIMAX), Wi-Fi, Bluetooth communication, infrared communication, ultrasonic communication, visible light communication (VLC), LiFi, and so on but are not limited thereto.

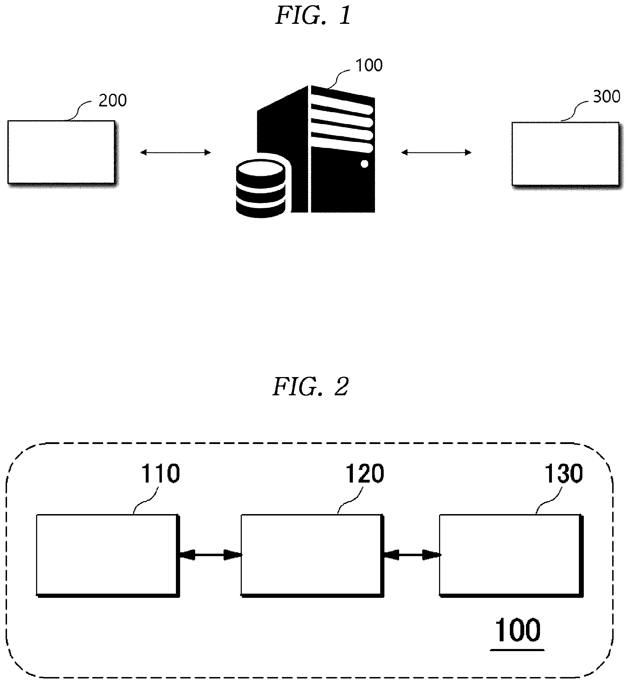

FIG. 1 is a diagram illustrating a system for monitoring real-time maritime logistics and operating a transportation information sharing platform according to an embodiment of the present disclosure.

Referring to FIG. 1, a system for monitoring real-time maritime logistics and operating a transportation information sharing platform, according to an embodiment of the present disclosure, may include a server 100, a shipper terminal 200, and a forwarder terminal 300, and the server 100, the shipper terminal 200, and the forwarder terminal 300 may be connected to each other through a communication network. In addition, the system for monitoring real-time maritime logistics and operating a transportation information sharing platform may be additionally connected to the terminals of a bonded warehouse operator and a shipping company.

The server 100 may be configured with a cloud computing server, such as software as a service (SaaS), platform as a service (PaaS), or infrastructure as a service (laaS). In addition, the server 100 may configured with a private cloud system, a public cloud system, or a hybrid cloud system, but the scope of the present disclosure is not limited thereto.

The server 100 receives shipment information including product information, a place of departure, and a place of arrival from the shipper terminal 200 and transmits the shipment information to the forwarder terminal 300.

The server 100 receives a specific area in a bonded warehouse corresponding to the shipment information, a name of a vessel delivering products, a bill of lading (BL) number, and maritime monitoring and information systems (MMIS) from the forwarder terminal 300.

The server 100 generates a uniform resource locator (URL) including the BL number, a vessel name, and shipping information, and transmits the URL to the shipper terminal 200 and the forwarder terminal 300.

The server 100 provides shipping information in real time to the shipper terminal 200 and the forwarder terminal 300 through the URL.

The shipper terminal 200 generates a BL number based on product information, which includes a type, size, number, and weight of a product, a place of departure, and a place of arrival.

The forwarder terminal 300 transmits a specific area in a bonded warehouse corresponding to the BL number, and the name of a vessel delivering the product to the server 100.

FIG. 2 is a diagram illustrating a detailed configuration of the server 100 illustrated in FIG. 1.

Referring to FIG. 2, the server 100 according to an embodiment of the present disclosure may include a communication module 110, a processor 120, and a memory 130.

The communication module 110 may include a device including hardware and software required to transmit and receive signals, such as control signals or data signals, through wired or wireless connections with other network devices.

The communication module 110 may receive a BL number from the shipper terminal 200. In addition, the communication module 110 may receive the name of a vessel and a specific area in a bonded warehouse from the forwarder terminal 300. In addition, the communication module 110 may transmit a URL including the BL number, a vessel name, and shipping information to the shipper terminal 200 and the forwarder terminal 300. However, a function of the communication module 110 is not limited thereto.

The processor 120 may include various types of devices that control and process data. The processor 120 may refer to a data processing device which has a physically structured circuit to perform functions expressed as codes or instructions included in a program and is built in hardware.

In one example, the processor 120 may be implemented by a microprocessor, a central processing unit (CPU), a processor core, a multiprocessor, or an application-specific integrated circuit (ASIC), a field programmable gate array (FPGA), or so on, but the scope of the present disclosure is not limited thereto.

The processor 120 performs an operation according to the codes stored in the memory 130.

The memory 130 may store at least one of information and data input to the communication module 110, information and data required for a function performed by the processor 120, and data generated according to execution of the processor 120.

The memory 130 may include a non-volatile storage device that continuously retain the stored information even when power is not supplied and a volatile storage device that requires power to maintain the stored information. The memory 130 may include magnetic storage media or flash storage media in addition to the volatile storage device that requires power to maintain the stored information, but the scope of the present disclosure is not limited thereto.

The memory 130 is electrically connected to the processor 120 and stores at least one code executed by the processor 120. The memory 130 stores codes that cause the processor 120 to perform following functions and procedures when executed through the processor 120.

The memory 130 stores codes that cause the memory 130 to receive shipment information including product information, a place of departure, and a place of arrival from the shipper terminal 200 and transmit the shipment information to the forwarder terminal 300 For example, the product information may include a type, size, number, and weight of a product.

The memory 130 stores codes that causes the memory 130 to receive a specific area in a bonded warehouse corresponding to the shipment information, a name of a vessel delivering products, a BL number, and maritime monitoring and information systems (MMIS) from the forwarder terminal 300. For example, the forwarder terminal 300 may lease a specific area of a vessel as a product loading location from a shipping company that owns the ship.

The memory 130 stores codes that cause the memory 130 to generate a URL including a BL number, a vessel name, and shipping information and transmit the URL to the shipper terminal 200 and the forwarder terminal 300. For example, the shipping information may include information on the shipper terminal 200 and the forwarder terminal 300, a name of a shipping company, information on the shipping company, a route from a bonded warehouse to a place of arrival, information on containers loaded on a vessel, a reservation schedule, a work schedule, and a current situation. In addition, the URL is collectively provided to the shipper terminal 200 and the forwarder terminal 300, and the URL may be shared through communication media including e-mail, a text, and a social networking service (SNS).

The memory 130 stores codes that cause the memory 130 to provide shipping information in real time to the shipper terminal 200 and the forwarder terminal 300 through a URL. For example, pieces of information included in the shipping information may be received in real time from a public institution server.

The memory 130 stores codes that cause the memory 130 to provide an interface including the shipping information. For example, the interface may include a company information area, a freight forwarder contact area, a reservation schedule area, a transshipment port and secondary vessel area, a travel route area, a work schedule area, a container information area, a container attachment area, an inland shipping information area, other information areas, other attachment areas, and a progress monitoring area.

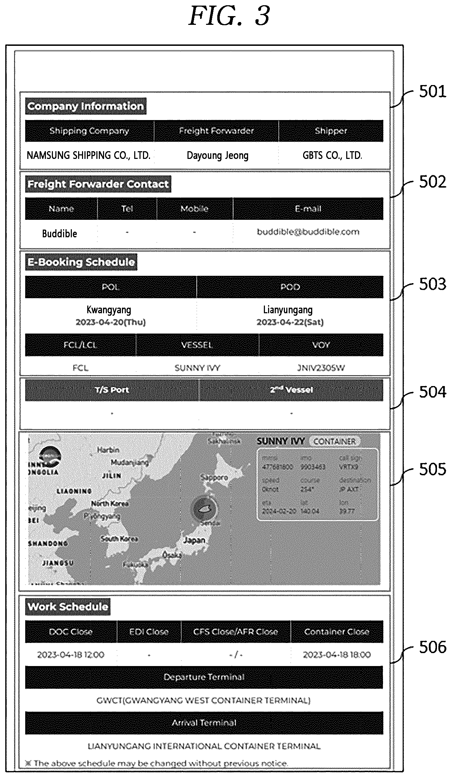

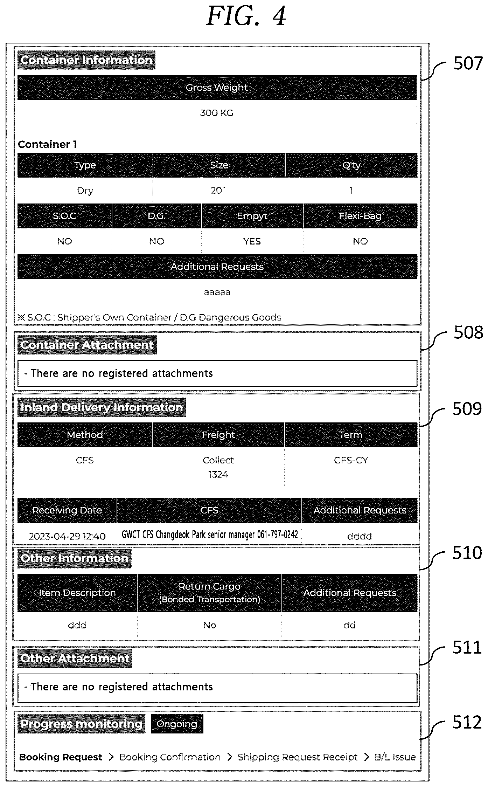

FIGS. 3 and 4 are example views illustrating shipping information according to an embodiment of the present disclosure.

Referring to FIG. 3, shipping information according to an embodiment of the present disclosure may include company information 501, a freight forwarder contact 502, an e-booking schedule 503, a transshipment port and second vessel 504, a movement route 505, and a work schedule 506.

The company information 501 may include a delivery company, a freight forwarder, and a deliverer. The delivery company may be a shipping company that owns a vessel. A freight carrier may be said to be a broker or forwarder who brokers between a shipping company and a manufacturer (shipper). A deliverer may be a subcontractor of a delivery company or a relevant company. The deliverer may sell a part of a shipping space of a vessel owned by the delivery company to a manufacturer (shipper).

The freight forwarder contact 502 is information on a forwarder and may include a company name, a phone number, a mobile number, and an e-mail address.

The reservation schedule 503 may include a port of load (POL), a port of discharge (POD), a container usage range (full container load (FCL) and less container load (LCL)), a vessel name, and a voyage (VOY). The POL indicates a port from which goods (products) depart, the POD indicates a port where goods (products) arrive, and the container usage range indicates whether all or only a part of 1 (twenty-foot equivalent units (TEU) of the container is used. The vessel name is a name of a vessel transporting goods (products), and the voyage is a serial number randomly determined by a shipping company (delivery company) or a freight transport company (forwarder).

When there is no direct route to transport the goods (products), goods (products) are transshipped from a transshipment port to the second ship, and in this case, the transshipment port and secondary vessel 504 is a name of a port where the goods (products) are transshipped and the second ship.

The movement route 505 displays, on a map, a route on which a vessel moves. For example, a route on which a vessel moves, a place of departure and a place of arrival, or a layover is displayed on a map. In addition, maritime mobile service identity (MMSI), a serial number (imo), speed, a course, a destination, estimated time of arrival (ETA), latitude (LAT), and longitude (LON) of a vessel may be displayed together.

The work schedule 506 may include document close (DOC close) time, electronic data interchange close (EDI close) time, container freight station close (CFS close), advance filing rules close (ARF close), container close, a departure terminal, and an arrival terminal.

Referring to FIG. 4, the shipping information according to an embodiment of the present disclosure may include container information 507, container attachment 508, inland delivery information 509, other Information 510, other attachments 511, and progress monitoring 512.

The container information 507 may include a gross weight, a container type, a size, quantity (Q'ty), a shipper's own container, whether there is dangerous goods (DG), whether it is empty (Empty), whether there is a risk of contamination of a freight (Flexi-Bag), and additional requests.

The inland delivery information 509 may include a method, a freight, a term, a receiving date, a container freight station (CFS), and additional requests.

The other information 510 may include item description, whether there is a return freight (bonded transportation), and additional requests.

The progress monitoring 512 may display a current state, such as ongoing, and display a current progress among booking request, booking confirmation, shipping request receipt, and bill of lading issue (B/L issue).

The shipping information described above with reference to FIGS. 3 and 4 may be provided in real time through a public institution server. For example, the public institution server may be an application programming interface (API) of the Korea Customs Service. In addition, the shipping information may be generated by using a BL number and a short URL and may be searched for through the URL.

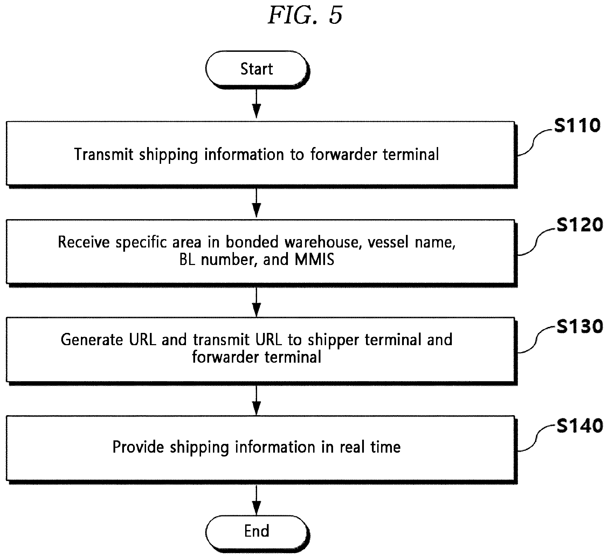

FIG. 5 is a flowchart illustrating a sequence of a method of monitoring real-time maritime logistics and operating transportation information sharing platform, according to another embodiment of the present disclosure.

The method of monitoring real-time maritime logistics and operating transportation information sharing platform to be described below may be performed by a system for monitoring real-time maritime logistics and operating a transportation information sharing platform previously described with reference to FIGS. 1 to 4. Accordingly, the embodiments of the present disclosure previously described with reference to FIGS. 1 to 4 may be equally applied to embodiments to be described below, and redundant description thereof are omitted below. The steps to be described below do not have to be performed sequentially, and the sequence of the steps may be set in various ways, and the steps may be performed almost simultaneously.

Referring to FIG. 5, the method of monitoring real-time maritime logistics and operating a transportation information sharing platform, according to another embodiment of the present disclosure, includes step S110 of transmitting delivery information to the forwarder terminal 300, step S120 of receiving a specific area in a bonded warehouse and a name of a vessel, step S130 of generating a URL and transmitting the URL to the shipper terminal 200 and the forwarder terminal 300, and step S140 of providing shipping information in real time.

Step S110 of transmitting shipment information to the forwarder terminal 300 includes receiving shipment information including product information, a place of departure, and a place of arrival from the shipper terminal 200, and transmitting the shipment information to the forwarder terminal 300. For example, the product information may include a type, size, number, and weight of a product.

Step S120 of receiving the specific area in the bonded warehouse, the vessel name, the BL number, and the MMIS includes receiving, from the forwarder terminal 300, a specific area in the bonded warehouse corresponding to shipment information, a name of a vessel delivering a product, the BL number, and the MMIS. For example, the forwarder terminal 300 may lease a specific area of a vessel as a product loading location from a shipping company that owns the vessel.

Step S130 of generating the URL and transmitting the URL to the shipper terminal 200 and the forwarder terminal 300 includes generating a URL including the BL number, the vessel name, and the shipping information, and transmits the URL to the shipper terminal 200 and the forwarder terminal 300. For example, the shipping information may include information on the shipper terminal 200 and the forwarder terminal 300, a name of a shipping company, information on the shipping company, a route from a bonded warehouse to a place of arrival, information on containers loaded on a vessel, a reservation schedule, a work schedule, and a current situation. In addition, the URL is collectively provided to the shipper terminal 200 and the forwarder terminal 300, and the URL may be shared through communication media including e-mail, text, and SNS.

Step S140 of providing the shipping information in real time includes providing the shipping information in real time to the shipper terminal 200 and the forwarder terminal 300 through the URL. For example, pieces of information included in the shipping information may be received in real time from a public institution server.

Step S140 of providing the shipping information in real time includes providing an interface including the shipping information. For example, the interface may include a company information area, a freight forwarder contact area, a reservation schedule area, a transshipment port and secondary vessel area, a travel route area, a work schedule area, a container information area, a container attachment area, an inland shipping information area, other information areas, other attachment areas, and a progress monitoring area.

The present disclosure greatly improves information transparency by providing a location, state, and customs clearance situations of freight in real time, and users may easily check and manage the real-time freight information through the system of the present disclosure, and thus, the efficiency and reliability of a logistics process may be increased.

In addition, the present disclosure uses digital documents instead of paper-based document work, and thus, environmental burden may be reduced to contribute to realizing environment, society, and governance (ESG).

In addition, the present disclosure may be accessed through various electronic devices, allowing users to check freight information anytime and anywhere, and the present disclosure may provide accurate real-time data, allowing users to make more effective decisions.

In addition, the present disclosure may easily provide tracking and management of maritime freight, real-time information, and information sharing between users, and thus, information transparency and accessibility may be increased in the maritime logistics industry, and automation and optimization of logistics management processes may be provided.

In addition, the present disclosure may systematize maritime logistics data management by utilizing real-time data.

An embodiment of the present disclosure may also be implemented in the form of a recording medium including instructions executable by a computer, such as a program module which is executed by a computer. A computer readable medium may be any available medium that may be accessed by a computer and includes both volatile and nonvolatile media, removable and non-removable media. In addition, the computer readable medium may include a computer storage medium. A computer storage medium includes both volatile and nonvolatile media and removable and non-removable media implemented by any method or technology for storing information, such as computer readable commands, data structures, program modules or other data.

Although the method and system of the present disclosure is described with respect to specific embodiments, some or all of their components or operations may be implemented by using a computer system having a general-purpose hardware architecture.

Those skilled in the technical field to which the present disclosure belongs will be able to understand that the present disclosure may be easily transformed into another specific form without changing technical idea or essential features based on the above description. Therefore, the embodiments described above should be understood as illustrative in all respects and not limiting. The scope of the present disclosure is indicated by the patent claims described below, and all changes or modified forms derived from the meaning and scope of the claims and their equivalent concepts should be construed as being included in the scope of the present disclosure. The scope of the present disclosure is indicated by the following claims rather than the detailed description above, and the meaning and scope of the claims and all changes or modifications derived from the equivalent concepts should be interpreted as being included in the scope of the present disclosure.

## Claims

1. A method of monitoring real-time maritime logistics and operating a transportation information sharing platform by a server (100), the method comprising:
receiving shipment information including product information, a place of departure, and a place of arrival from a shipper terminal, and transmitting the shipment information to a forwarder terminal (S110);
receiving, from the forwarder terminal, a specific area in a bonded warehouse corresponding to the shipment information, a name of a vessel delivering a product, a bill of lading (BL) number, and maritime monitoring and information systems (MMIS) (S120);
generating a uniform resource locator (URL) including the bill of lading number, the name of the vessel, and the shipping information, and transmitting the uniform resource locator to the shipper terminal and the forwarder terminal (S130); and
providing the shipping information in real time to the shipper terminal and the forwarder terminal through the uniform resource locator (S140).

2. The method of claim 1, wherein
the product information includes a type, size, number, and weight of the product.

3. The method of claim 1 or claim 2, wherein
the forwarder terminal performs a procedure of leasing a specific area of the vessel as a product loading location from a shipping company that owns the vessel.

4. The method of any of the previous claims, wherein
the shipping information includes information on the shipper terminal and the forwarder terminal, a name of the shipping company, information on the shipping company, a route from the bonded warehouse to a place of arrival, information on a container loaded on the vessel, a reservation schedule, a work schedule, and a current situation.

5. The method of any of the previous claims, wherein,
in the providing of the shipping information in real time, pieces of information included in the shipping information are received in real time from a public institution server.

6. The method of any of the previous claims, wherein
the uniform resource locator (URL) is collectively provided to the shipper terminal and the forwarder terminal, and
the uniform resource locator (URL) is shared through communication media including e-mail, a text, and a social networking service (SNS).

7. The method of any of the previous claims, wherein
the providing of the shipping information in real time includes providing an interface including the shipping information, and
the interface includes a company information area, a freight forwarder contact area, a reservation schedule area, a transshipment port and secondary vessel area, a travel route area, a work schedule area, a container information area, a container attachment area, an inland shipping information area, other information areas, other attachment areas, and a progress monitoring area.

8. A system for monitoring real-time maritime logistics and operating transportation information sharing platform, the system comprising:
a communication module (110);
a processor (120); and
a memory (130) electrically connected to the processor (120) and storing at least one code executed by the processor (120),
wherein the processor (120) is configured to receive shipment information including product information, a place of departure, and a place of arrival from a shipper terminal, transmit the shipment information to a forwarder terminal, receive, from the forwarder terminal, a specific area in a bonded warehouse corresponding to the shipment information, a name of a vessel delivering a product, a bill of lading (BL) number, and maritime monitoring and information systems (MMIS), generate a uniform resource locator (URL) including the bill of lading number, the name of the vessel, and the shipping information, transmit the uniform resource locator (URL) to the shipper terminal and the forwarder terminal, provide the shipping information in real time to the shipper terminal and the forwarder terminal through the uniform resource locator (URL), and
the memory (130) stores codes that cause the processor (120) to operate.

9. The system of claim 8, wherein
the product information includes a type, size, number, and weight of the product.

10. The system of claim 8 or claim 9, wherein
the forwarder terminal leases a specific area of the vessel as a product loading location from a shipping company that owns the vessel.

11. The system of any of claims 8 to 10, wherein
the shipping information includes information on the shipper terminal and the forwarder terminal, a name of the shipping company, information on the shipping company, a route from the bonded warehouse to a place of arrival, information on a container loaded on the vessel, a reservation schedule, a work schedule, and a current situation.

12. The system of any of claims 8 to 11, wherein
the memory (130) stores a code that causes the processor (120) to receive pieces of information included in the shipping information in real time from a public institution server.

13. The system of any of claims 8 to 12, wherein
the uniform resource locator (URL) is collectively provided to the shipper terminal and the forwarder terminal, and
the uniform resource locator (URL) is shared through communication media including e-mail, a text, and a social networking service (SNS).

14. The system of any of claims 8 to 13, wherein
the memory (130) stores a code that causes the processor (120) to provide an interface including the shipping information, and
the interface includes a company information area, a freight forwarder contact area, a reservation schedule area, a transshipment port and secondary vessel area, a travel route area, a work schedule area, a container information area, a container attachment area, an inland shipping information area, other information areas, other attachment areas, and a progress monitoring area.
